# DEMANDE DE BREVET EUROPEEN

(11) **EP 0 886 097 A1**
(43) Date de publication de la demande: **23.12.1998**
(21) Numéro de dépôt: 98401492.8
(22) Date de dépôt: 18.06.1998
(51) Int. Cl.: F16L 39/00

(54) **Bloc hydraulique muni d'un système de montage de securité de branchement**

(30) Priorité: 19.06.1997 FR 9707619
(71) Demandeur: Hispano-Suiza Aérostructures, 76700 Gonfreville l'Orcher (FR)
(72) Inventeur: Baudu, Pierre, 76600 Le Havre (FR); Vauchel, Guy Bernard, 76610 Le Havre (FR); Gonidec, Patrick, 76290 Montivilliers (FR)

(57) **Abrégé**

Deux raccords (4, 5) d'un branchement hydraulique sont reliés par une semelle (3) qui coopère avec une excroissance (10) du bloc hydraulique (12) en imposant une position déterminée dans la configuration démontée. Un verrouillage est adjoint, comportant un axe mécanique (6), logé dans la semelle (3), disposé entre les raccords (4, 5) et coopérant avec une rainure (7, 8) respectivement ménagée sur chaque raccord (4, 5) de manière à imposer un ordre prioritaire de montage/démontage des raccords (4, 5).

## Description

La présente invention concerne un bloc hydraulique muni d'un système de montage de sécurité utilisant au moins deux raccords dans un branchement hydraulique

L'invention applicable à tout système hydraulique trouve notamment une application intéressante à tout système hydraulique associé à un inverseur de poussée de turboréacteur à double flux pour lequel les contraintes de sécurité de fonctionnement doivent impérativement être respectées.

On rappelle dans cette application particulière que le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la trainée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

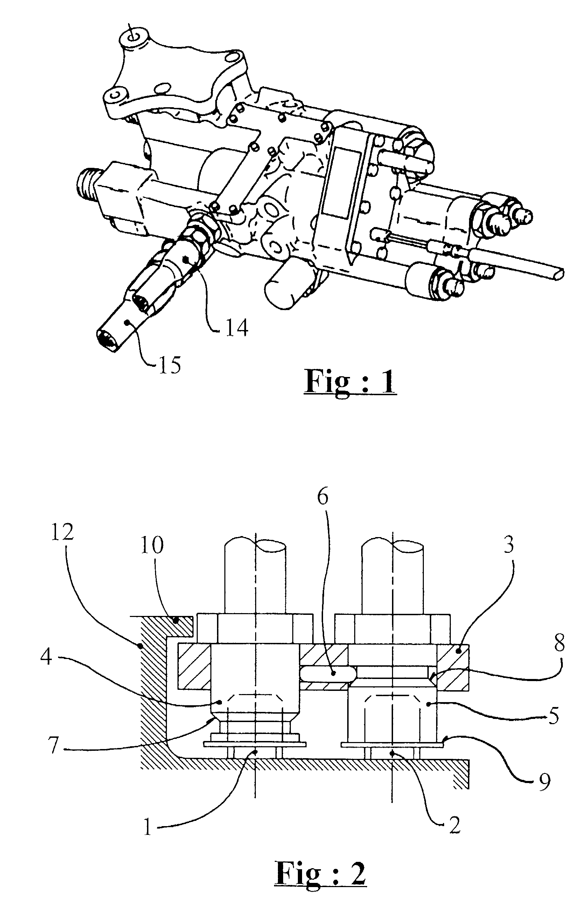

Dans ce cas le dispositif d'inversion associé au turboréacteur est de tout type connu en soi tel que à portes, à grilles ou également à panneaux aval dit target. Généralement dans ces inverseurs de poussée la commande de manoeuvre des éléments mobiles se fait par l'intermédiaire d'un bloc hydraulique encore désigné par HCU (Hydraulic Control Unit) qui commande les vérins hydrauliques assurant les déplacements et les systèmes de verrouillage. La figure 1 des dessins joints montre un exemple connu de réalisation d'un tel bloc hydraulique comportant en 14 un branchement de l'alimentation du circuit hydraulique sur le bloc et en 15 un retour. Dans ces exemples connus de réalisation tel que celui qui est représenté sur la figure 1, les tuyauteries assurant respectivement d'une part, l'alimentation 14 et d'autre part, le retour 15 sont totalement indépendantes entre elles.

Pour des raisons de maintenance, il peut arriver que l'alimentation et le retour du circuit hydraulique du bloc hydraulique sont pendant cette opération déconnectés et de ce fait, les raccords de ce bloc hydraulique sont protégés par des bouchons. Le risque encouru par cette opération manuelle est que l'opérateur puisse remonter la tuyauterie de l'alimentation en oubliant de rebrancher celle du retour et en laissant le bouchon sur l'embout du retour. Le résultat de cet oubli est une montée en pression progressive du circuit hydraulique qui peut entrainer certains problèmes de fonctionnement.

Certaines dispositions connues ont antérieurement été proposées, permettant d'interdire le raccordement d'une canalisation d'alimentation, lorsqu'une canalisation d'évacuation du trop-plein n'est pas raccordée, dans un dispositif de remplissage par exemple, notamment tel qu'illustré par EP-A-0 494 818.

Un des buts de l'invention est d'utiliser des moyens alternatifs constituant un système simple et fiable qui impose un ordre de montage et de démontage de raccords hydrauliques de manière à interdire l'installation d'un raccord tant que celui qui est considéré comme celui devant impérativement être monté en premier n'a pas été mis en place.

Un bloc hydraulique comportant au moins deux raccords, conforme à l'invention et répondant à ces conditions est caractérisé en ce que deux raccords sont reliés par une semelle comportant un logement dans lequel est monté libre un axe mécanique disposé entre les deux raccords et coopérant avec deux rainures ménagées respectivement une sur chaque raccord et décalées dans la configuration des raccords montés suivant la direction du montage/démontage coïncidant avec l'axe géométrique des raccords, ladite semelle coopérant avec une excroissance ménagée sur la structure du bloc et imposant une position déterminée dans la configuration démontée.

D'autres caractéristiques et avantages de l'invention seront mieux compris à la lecture de la description qui va suivre d'un mode de réalisation de l'invention, en référence aux dessins annexés sur lesquels :
- la figure 1 représente un exemple précédemment décrit de réalisation connue de branchement hydraulique habituellement rencontré ;
- la figure 2 représente un bloc hydraulique suivant un mode de réalisation de l'invention, équipé de deux raccords montés;
- la figure 3 représente le bloc hydraulique représenté sur la figure 2 dont un raccord est désaccouplé ;
- la figure 4 représente le bloc hydraulique représenté sur la figure 2 dont les deux raccords sont désaccouplés ;
- la figure 5 représente le bloc hydraulique représenté sur la figure 2 dans une configuration ne permettant pas son installation ;
- la figure 6 représente un encastrement de reprise d'effort;
- la figure 7 représente un exemple de forme de semelle et de son réceptacle.

Selon un mode de réalisation de l'invention représentée sur la figure 2, une semelle 3 relie un certain nombre de raccords.Le nombre de raccords n'est pas limitatif mais pour des raisons de simplicité d'explication nous n'utiliserons que deux raccords.Dans ce cas la semelle 3 relie le raccord 4 au raccord 5.

Chaque raccord comporte une rainure respectivement 7 et 8 de forme adaptée permettant par simple réaction d'effort d'agir sur la manoeuvre d'un axe mécanique 6 monté libre dans un logement pratiqué dans la semelle 3 et reliant lesdits raccords. Ce système du tout ou rien peut être aussi bien réalisé par un moyen de basculeur articulé ou tout autre moyen à la portée de l'homme de l'art, le but étant d'interdire la manoeuvre d'un élément si le premier n'est pas dans la position désirée.

L'axe 6 sert de verrou pour l'un ou l'autre raccord suivant la position de ceux-ci sur la semelle 3. En effet comme montré sur la figure 2, l'axe 6 empêche le démontage du raccord 5 tant que le raccord 4 n'est pas entièrement ressorti de l'embout 1 et que la rainure 7 n'est pas en vis à vis de l'axe 6. L'effet remarquable d'un tel système est qu'il permet d'ordonner les phases de démontage et de remontage des raccords en fonction des positions des rainures 7 et 8 sur lesdits raccords 4 et 5.

Les raccords 4 et 5 sont montés solidaires de la semelle 3, soit de manière indémontable comme un sertissage de l'extrémité 9, soit de manière démontable comme un anneau élastique monté à l'extrémité 9 ou tout autre système de maintien existant et connu de l'homme de métier.

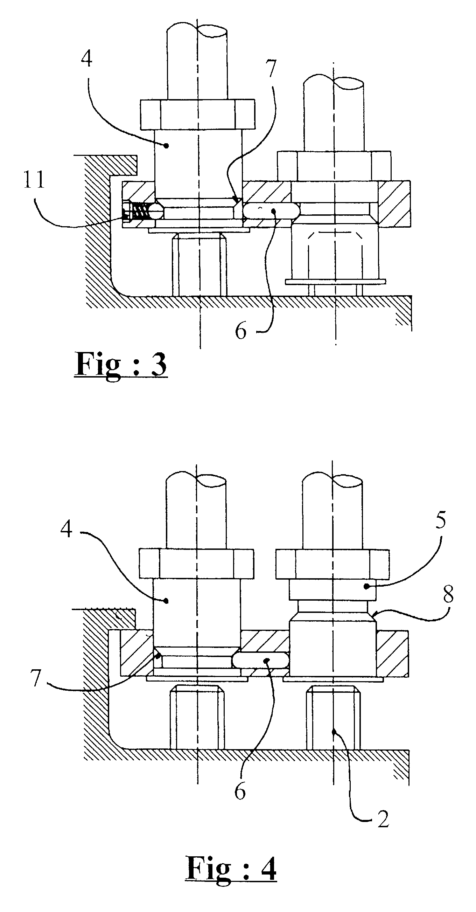

Une fois le raccord 4 ressorti de sa position de travail un système de blocage peut maintenir le raccord 4 dans cette position. Il peut être à ressort et bille 11 comme représenté sur la figure 3 ou bien tout autre connu de l'homme de l'art. Ce système permet d'assurer une position correcte du raccord 4 par rapport à l'axe 6 par le système de ressort appliqué entre la tête du raccord 4 et la semelle 3 et permettre un démontage aisé du raccord 5.

La semelle 3 a une forme adaptée au besoin, elle est définie pour que sa hauteur soit compatible avec les diamètres des raccords et selon la dimension des embouts 1 et 2, ceux-ci pouvant être de hauteur différente.

La figure 3 montre la phase intermédiaire de démontage de l'ensemble. Cette position montre le dégagement procuré par la rainure 7 du raccord 4 par rapport à l'axe 6.

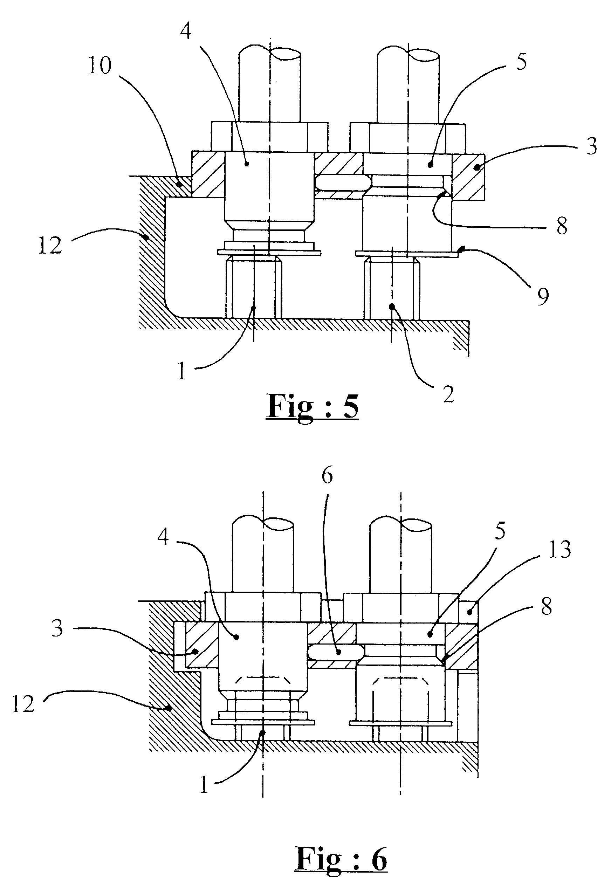

La figure 4 montre le raccord 5 en position dévissée de son embout 2. Le chanfrein de la rainure 8 ayant escamoté l'axe 6 dans l'espace disponible laissé par la rainure 7 du raccord 4.

Selon un mode de réalisation de l'invention représenté sur la figure 5, une excroissance 10 sur la structure 12 comportant les embouts 1 et 2, oblige pour pouvoir monter l'ensemble, de présenter les raccords 4 et 5 en contact par la butée 9 sur la partie inférieure de la semelle 3. Une fois cette opération réalisée on se retrouve dans les conditions présentées sur la figure 4 mais cette fois ci pour le remontage et dans ce cas, seul le raccord 5 n'est autorisé à être vissé avant de laisser l'échappement possible de l'axe 6 dans sa rainure 8 et permettre ainsi le vissage du raccord 4.

Suivant la figure 6, pour éviter une reprise d'effort par le raccord 4 et son embout 1 en cas de démontage réalisé par erreur du raccord 5 avant le raccord 4, un encastrement qui peut être local 13 permet de faire transiter l'effort engendré par le contact de la rainure 8 sur l'axe 6, par la semelle. Un jeu nécessaire au bon montage c'est à dire n'empêchant pas le montage correct des raccords sur les embouts peut être prévu soit entre la semelle 3 et la structure 12, soit entre la tête des raccords et la partie supérieure de la semelle 3.

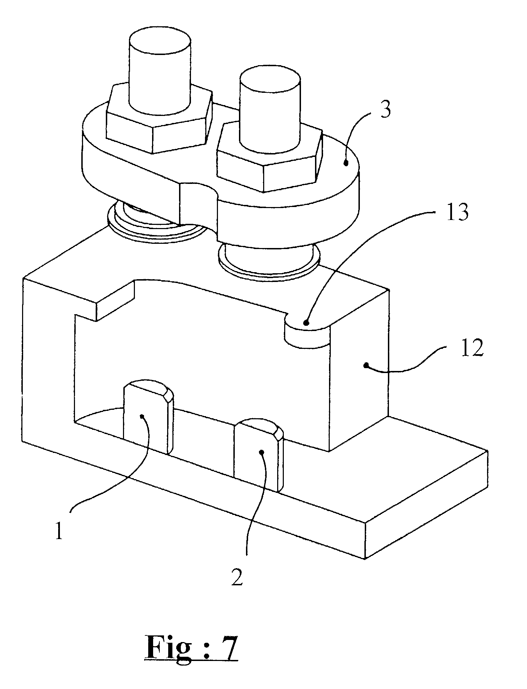

Le détrompage interdisant le montage de l'ensemble dans une position indésirée peut être réalisé soit selon la figure 7 qui montre qu'une forme adaptée et spécifique d'un élément 3 ne peut tenir dans l'autre élément 12 que dans une position et une seule ou bien alors celui-ci peut être réalisé par une dimension différente des embouts 1 et 2 en diamètre et même en hauteur.

L'exemple de réalisation précédemment décrit en référence aux figures 2 à 6 prévoit un montage à vis des raccords 4 et 5 sur les embouts 1 et 2. L'invention s'applique bien entendu aux cas où le raccordement utilise un système dit "quart de tour" ou tout autre à démontage rapide de type connu en soi. Conformément à l'invention, un verrou intermédiaire de conception adaptée et intégré à la semelle de liaison des raccords permet également dans ces cas d'assurer un montage d'un raccord rapide avant l'autre.

Par ailleurs, pour des raisons de disposition, de choix technologique ou de structure d'un matériel existant, la structure 12 peut constituer un boitier indépendant du bloc hydraulique et peut être placé dans ce cas à tout emplacement de l'ensemble mécanique déterminé par l'homme du métier en fonction de l'application et notamment sur la nacelle dans le cas d'une application visée par l'invention à un inverseur de poussée de turboréacteur.

## Revendications

1. Bloc hydraulique comportant un branchement composé d'au moins deux raccords (4, 5) caractérisé en ce que les deux raccords (4, 5) sont reliés par une semelle (3) comportant un logement dans lequel est monté libre un axe mécanique (6) disposé entre les deux raccords (4, 5) et coopérant avec deux rainures (7, 8) ménagées respectivement une sur chaque raccord (4, 5) et décalées dans la configuration des raccords (4, 5) montés suivant la direction du montage/démontage coïncidant avec l'axe géométrique des raccords (4, 5), ladite semelle (3) coopérant avec une excroissance (10) ménagée sur la structure (12) du bloc et imposant une position déterminée dans la configuration démontée

2. Bloc hydraulique à deux raccords (4, 5) selon la revendication 1 caractérisé en ce que le raccord (4) seul démontable en premier est associé à un système de blocage à bille et ressort (11) coopérant avec ladite rainure (7) dans la configuration où ledit raccord (4) est ressorti de sa position de travail.

3. Bloc hydraulique à deux raccords (4, 5) selon l'une des revendications 1 ou 2 caractérisé en ce que dans la configuration montée la semelle (3) coopère avec un encastrement (13) ménagé dans la structure (12) du bloc.

4. Bloc hydraulique à deux raccords (4, 5) selon l'une quelconque des revendications 1 à 3 caractérisé en ce qu'une disposition de détrompage est adjointe de manière à interdire le montage des raccords (4; 5) l'un à la place de l'autre.
